# EUROPEAN PATENT APPLICATION

(11) **EP 2 918 208 A1**
(43) Date of publication of application: **16.09.2015**
(21) Application number: 15158832.4
(22) Date of filing: 12.03.2015
(51) Int. Cl.: A47J 43/046, A47J 43/07, A47J 43/28

(54) **BLENDER JAR SCRAPING UTENSIL**

(30) Priority: 14.03.2014 US 201461953029 P; 11.03.2015 US 201514644884
(71) Applicant: Whirlpool Corporation, Benton Harbor, MI 49022 (US)
(72) Inventor: Haney, Edward, 21025 Comerio (IT); Kachorek, Jason P., 21025 Comerio (IT); McConnell, John W., 21025 Comerio (IT); Paget, Paul S., 21025 Comerio (IT)
(74) Representative: Guerci, Alessandro

(57) **Abstract**

A blending appliance includes a blender jar (74) defining a receptacle portion (90), an open end (82), and a closed end (98). A blender lid (86) is configured to mate with the open end (82) of the bender jar (74). The lid (86) defines an aperture (102). A blender (70) has an upper housing (110) defining a cavity (126) configured to accept a funnel (130). The blender (86) is configured to accept the blender jar (74) such that the funnel (130) and the lid aperture (102) are aligned. A scraping utensil (10, 200, 400) has a scraper portion (46, 208, 420) and a bulge (30, 206, 408). The bulge (30, 206, 408) is configured to pivotally engage the funnel (130) such that the scraper portion (46, 208, 420) may be adjusted within the receptacle portion (90).

## Description

### FIELD OF THE INVENTION

The present concept generally relates to a scraping utensil, and more particularly, to a blenderjar scraping utensil.

### BACKGROUND

Blending appliances often benefit from the ability to manipulate material within a blender jar before, during, and after blending. In order to manipulate the blended material within the jar, such appliances may utilize different tools to accomplish various tasks within the jar.

### SUMMARY

According to one aspect of this disclosure, a blending appliance includes a blender jar defining a receptacle portion, an open end, and a closed end. A blender lid is configured to mate with the open end of the bender jar. The lid defines an aperture. A blender has an upper housing defining a cavity configured to accept a funnel. The blender is configured to accept the blender jar such that the funnel and the lid aperture are aligned. A scraping utensil has a scraper portion and a bulge. The bulge is configured to pivotally engage the funnel such that the scraper portion may be adjusted within the receptacle portion.

According to another aspect of this disclosure, a blender scraper includes a handle, an intermediate bulge integrally coupled with the handle and a smooth exterior surface. A stem is operably coupled with the bulge and a flexible overmold is configured to be positioned over the stem. The overmold defines a vertical scraper, a blunt tip, and a horizontal scraper.

According to yet another aspect of this disclosure, a scraper includes a handle and a bulge that is integrally coupled with the handle. The bulge has a bulbous shape. A scraper portion integrally defines a vertical scraper, a contoured tip, and a horizontal scraper. The contoured tip is configured to be closely received by a closed end of a blender jar.

These and other aspects, objects, and features of the present disclosure will be understood and appreciated by those skilled in the art upon studying the following specification, claims, and drawings.

### BRIEF DESCRIPTION OF THE DRAWINGS

In the drawings:
FIG. 1 is a cross-sectional view of one embodiment of a blending appliance having a blender scraper disposed therein;
FIG. 1A is an enlarged partial cross-sectional view of the blender appliance of FIG. 1 with the blender scraper disposed therein;
FIG. 2 is a top perspective view of a first side of another embodiment of a blender scraper;
FIG. 2A is a top perspective view of a second side of the blender scraper of FIG. 2;
FIG. 3 is a top perspective view of an underlying support structure of the blender scraper of FIG. 2;
FIG. 3A is a top perspective view of one embodiment of a fully constructed blender scraper;
FIG. 4 is a top perspective view of another embodiment of an underlying support structure of a blender scraper; and
FIG. 4A is a top perspective view of one embodiment of a fully constructed blender scraper.

### DETAILED DESCRIPTION

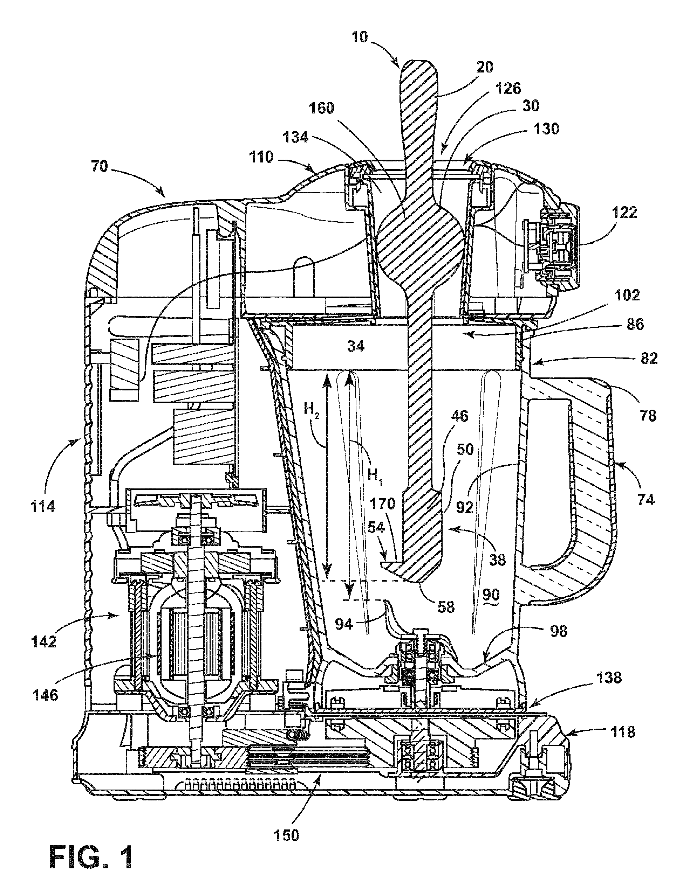

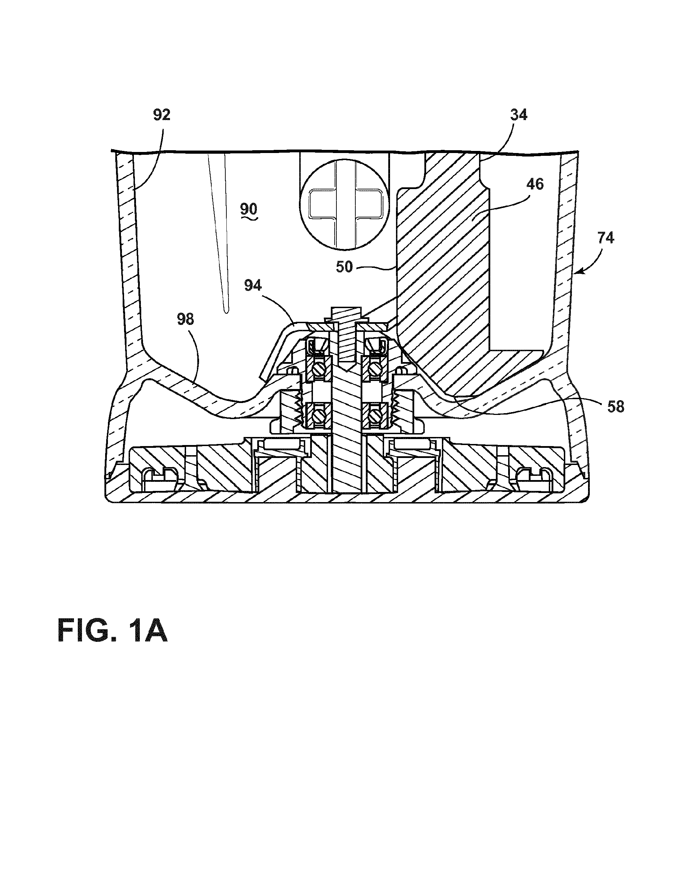

In the embodiments shown in FIGS. 1-4A, a blender scraper 10 is shown having a handle 20 composed of a rigid food grade polymer. The handle 20 has a circular cross-section. A bulge 30 is integrally connected to the handle 20 and tapers to a cylinder 34 on a portion opposite the handle 20. A scraper portion 38 includes a flexible scraper overmold 46. The scraper portion 38 integrally connects to the cylinder 34. The scraper overmold 46 defines a vertical scraper 50, a horizontal scraper 54, and a contoured blunt tip 58.

Referring now to FIG. 1, a blending appliance 70 and a blender jar 74 are depicted in assembly. The blender jar 74, according to one embodiment, is a hollow shell configured to receive materials to be blended or mixed therein. In some embodiments, the materials are foods and food ingredients. The blender jar 74 includes a jar handle 78, an open end 82, a lid 86 removably disposed on the open end 82, a receptacle portion 90, and a closed end 98. The receptacle portion 90 further includes an inner surface 92 and a blade assembly 94. The lid 86 defines an opening 102 which permits access to the receptacle portion 90 of the blender jar 74. Thus, material can be introduced into the jar 74 either by removing the lid 86, or by inserting the material through the opening 102 in the lid 86. Beneath the blade assembly 94, the closed end 98 of the blender jar 74 has contours to aid in mixing of material within the receptacle portion 90.

The blending appliance 70 includes, in the illustrated embodiment, an upper housing 110, a lower housing 114, and a base unit 118. The upper housing 110 includes a user control interface 122, and defines a cavity 126 vertically extending through the upper housing 110. Disposed in the cavity 126 is a tapered funnel 130 having an inner surface 134 that is substantially smooth. The lower housing 114 includes a blender jar receiving area 138 for receiving the blender jar 74, and a motor compartment 142 which houses a motor 146. When the blender jar 74 and lid 86 are in the receiving area 138, the tapered funnel 130 aligns with the opening 102 of the lid 86 and permits access from above the upper housing 110 into the receptacle portion 90 of the blender jar 74. In assembly, the motor 146 is adapted to drive the blade assembly 94 disposed within the receptacle portion 90 of the jar 74 through a belt drive system 150 located in the base unit 118.

The blender scraper 10 is depicted as extending through the cavity 126 of the upper housing 110 and the opening 102 of the lid 86 such that the scraper portion 38 of the blender scraper 10 is disposed within the receptacle portion 90 of the blender jar 74. It is also contemplated that the blender scraper 10 may be used with the blender jar 74 independently of the blending appliance 70 by accessing the receptacle portion 90 through either just the lid 86 or through the open end 82 of the jar 74. For purposes of this disclosure, the blender scraper 10 has a proximal end proximate the handle 20 and a distal end proximate the blunt tip 58.

Still referring to FIG. 1, the blender scraper 10, when engaged with the blending appliance 70, is configured such that the handle 20 protrudes from the upper housing 110 and the scraper portion 38 is disposed within the receptacle portion 90 of the blender jar 74. The handle 20 extends sufficiently high above the upper housing 110 that a user of the blending appliance 70 can grasp and manipulate the handle 20 during use of the blending appliance 70. As the bulge 30 of the blender scraper 10 is inserted into the tapered funnel 130 of the upper housing 110, an outer surface 160 of the bulge 30 makes contact with the inner surface 134 of the of the tapered funnel 130, thereby pivotally engaging the blender scraper 10 with the upper housing 110. It is also contemplated that the bulge 30 may pivotally connect directly with the cavity 126 of the upper housing 110 or with the opening 102 of the lid 86 in a manner similar to that of the tapered funnel 130. Thereafter, as the handle 20 is manipulated by the user, the bulge 30 pivots with respect to the upper housing 110 such that the scraper portion 38 may be moved and rotated throughout the receptacle portion 90 of the blender jar 74. The engagement of the bulge 30 with the funnel 130 serves a secondary purpose of establishing a maximum depth within the blender jar 74 that the scraper portion 38 can reach while the jar 74 is in the blending appliance 70. The blade assembly 94 is separated from the lid 86 by a height H₁. As the bulge 30 pivotally engages the tapered funnel 130, the blender scraper 10 is prevented from entering the jar 74 any further and a distance H₂, between the blunt tip 58 of the blender scraper 10 and the lid 86, is formed. The distance H₂ is less than that of H₁, thereby preventing the blender scraper 10 from contacting the blade assembly 94. The establishment of a maximum depth for the blender scraper 10 while the jar 74 is in the blending appliance 70 prevents the scraper 10 from being injured by contacting the blade assembly 94 while it is in use. Accordingly, the blender scraper 10 is capable of being used while the motor 146 is operating the blade assembly 94.

Referring now to FIGS. 1 and 1A, the scraper portion 38 of the blender scraper 10 includes the overmold 46. The overmold 46 is substantially composed of a flexible polymer. The scraper overmold 46 integrally includes the vertical scraper 50 and the horizontal scraper 54. The scraper overmold 46 also has the blunted tip 58 that is contoured to mirror, or be closely received by, the closed end 98 of the blender jar 74. The vertical scraper 50 is formed from an edge or fin of the scraper overmold 46 and runs parallel to the axis of the blender scraper 10. The vertical scraper 50 can be operated to scrape materials from the inner surface 92 of the receptacle portion 90 and return the material to the blade assembly 94 for mixing. The horizontal scraper 54 is defined by the overmold 46 on a portion opposite that of the vertical scraper 50. The horizontal scraper 54 has a surface 170 perpendicular to the axis of the blender scraper 10. The horizontal scraper 54 may assist the user in manipulating blended material or removing blended material from the blender jar 74.

The scraper overmold 46 further defines the blunt tip 58 that is contoured to mirror, or be closely received by, the closed end 98 of the blender jar 74. The blunt tip 58 is curved and smooth to provide a wide surface area to contact with the blended material. The blunt tip 58 allows the user to apply a downward force on material located in the receptacle portion 90 while the blending appliance 70 is in use and the blade assembly 94 is operating. The blunted tip 58 is also capable of disrupting the effect known as bridging by applying a downward force on the blended material. As described above, when the blender jar 74 is removed from the blending appliance 70, the scraper portion 38 is capable of contacting the closed end 98 of the blender jar 74. In such instances, the contour of the blunt tip 58, as shown in FIG. 1A, allows a user of the blender scraper 10 to efficiently remove blended material from beneath the blade assembly 94. It is contemplated that the scraper overmold 46 may be sufficiently flexible to permit the tip 58 to contour to the closed end 98 of any blender jar 74.

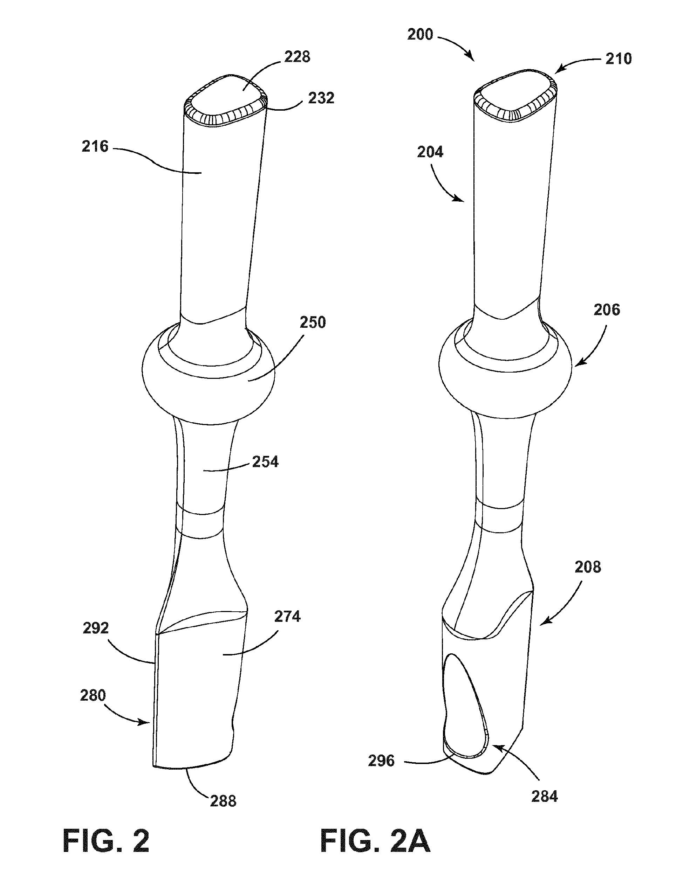

Referring now to FIGS. 2-3A, another embodiment of a blender scraper 200 is shown having a number of features that are similar to the blender scraper 10 described above, but having different reference numerals. The blender scraper 200 includes a handle 204, a bulge 206, and a scraper portion 208. The blender scraper 200 is approximately 38 centimeters. However, it is contemplated the scraper 200 can be between 25.4 centimeters and 50.8 centimeters. The handle 204 of the blender scraper 200 has a trapezoidal cross-section and is frustoconical in shape. The handle 204 of the blender scraper 200 includes an end cap 210, a handle core 212 and a handle overmold 216. The handle core 212 is a substantially flat piece of rigid polymer around which the handle overmold 216 is formed. The handle core 212, as illustrated, includes a first pressure rib 220 running the length of the handle core 212. The handle overmold 216 is composed primarily of a flexible polymer which creates a comfort grip for the user while operating the blender scraper 200. The handle overmold 216 surface is smooth and continuous around the handle core 212. In some embodiments, the handle overmold 216 may have anti-slip surface gripping features including, but not limited to, finger grips, an ergonomic structure, and stippling. The handle 204 may also be oversized to provide ease of gripping for the user. The first pressure rib 220 of the handle core 212 acts as a locking feature for preventing motion of the handle overmold 216 relative to the handle core 212. It is contemplated that the handle core 212 may include other features to aid in resisting motion of the overmold 216 or that adhesives and other joining methods known in the art may be used. The end cap 210 has a flat end surface 228 that rounds to an end cap retention lip 232. The retention lip 232 is configured such that an edge portion of the handle overmold 216 engages the retention lip 232 and is thereby prevented from sliding off of the handle core 212. The handle overmold 216 extends from the end cap 210, over the handle core 212, and to a bulge retention surface 236. The bulge retention surface 236 is positioned on the bulge 206 such that as the blender scraper 200 is used for vigorous tamping, the overmold 216 does not slide onto the bulge 206.

Referring again to FIGS. 2-3A, the proximal end of the bulge 206 is integrally connected with the core 212 of the handle 204 and is disposed about an intermediate portion of the blender scraper 200. The bulge 206 is rounded in shape and defines the greatest width of the blender scraper 200. The diameter of the bulge 206 is approximately 6.4 centimeters. However, it is contemplated that the bulge diameter may be between 3.8 centimeters and 7.6 centimeters. In some embodiments, the bulge 206 can be bulbous, spherical, or semi-spherical in shape. The bulge 206 has an outer surface 250 that is smooth and is capable of pivotally engaging with other plastics and materials. The outer surface 250 can be configured to incorporate a number of features including protrusions, grooves, or rollers designed to help pivot the bulge 206 within the tapered funnel 130 or cavity 126 of the upper housing 110. The bulge 206 is composed primarily of the same rigid polymer from which the handle core 212 is constructed. It is contemplated that the bulge 206 may be formed of a polymer or material different than that of the handle core 212 which provides improved properties for pivotal engagements. A distal portion of the bulge 206 tapers to a substantially cylindrical portion 254 which includes a cylinder retention lip 258.

The scraper portion 208 integrally protrudes from the cylindrical portion 254 of the blender scraper 200. The scraper portion 208 includes a scraper core 270 and a scraper overmold 274. The scraper core 270, as depicted, includes a second pressure rib 278 extending the length of the scraper core 270 in a curved fashion. The second pressure rib 278 resists rotating motion of the scraper overmold 274 relative to the scraper core 270. In some embodiments, the scraper overmold 274 may be held in place via adhesives or additional locking features located on the scraper core 270. The scraper overmold 274 includes various features for use in the blending appliance 70. The scraper overmold 274 defines a vertical scraper 280, a horizontal scraper 284, and a contoured blunt tip 288. The vertical scraper 280 is a vertically oriented edge 292 defined by the scraper overmold 274. The edge 292 extends parallel to the axis of the blender scraper 200. The vertical scraping edge 292 is approximately 10.1 centimeters in length and 4 mm thick. It is contemplated that the vertical scraping edge 292 may be 2 in to 8 in in length and between 1-8 mm thick. The flexible polymer of the scraper overmold 274 allows the vertical scraping edge 292 to flex and deform as it makes contact with the blender jar 74. The scraper overmold 274 also defines the horizontal scraper 284. The horizontal scraper 284 is a horizontally oriented edge 296 approximately 4.4 centimeters long and 2 mm thick. However, it is contemplated that the edge 296 may be between 2.5 centimeters and 7.6 centimeters and that the thickness may be between 1 mm and 4 mm. During the use of the blender scraper 200, the user is likely to cause forceful contact between the scrapers 280, 284 and the inner surface 92 of the blender jar 74. The flexible polymer of the scraper overmold 274 allows the forceful contact between the scrapers 280, 284 and the inner surface 92 of the jar 74 without produce marring or scratching of the jar 74.

According to some embodiments, the polymer employed in the handle core 212, the bulge 206, and the scraper core 270 can be a rigid food grade plastic. Exemplary food grade plastics include, but are not limited to, polyethylene terephthalate (PET or PETE), high-density polyethylene (HDPE), polyvinyl chloride (V or PVC), low-density polyethylene (LDPE), polypropylene (PP), polystyrene (PS), or biologically derived plastics. The rigid polymer material used ideally has a Shore hardness value sufficient to survive vigorous tamping and scraping by the user. Exemplary Shore values include 40D to 100D and more particularly 50D to 80D. It is also contemplated that the handle core 212, bulge 206, and scraper core 270 may be composed of combinations of the above listed polymers. In yet more embodiments, the handle core 212, bulge 206, and scraper core 270 may be composed of a composite of food grade polymers and food grade metals. In yet even more embodiments, the polymer employed may or may not incorporate the hardening chemical biphenol A.

The flexible polymer used in the handle overmold 216 and the scraper overmold 274 may be composed of a variety of food safe polymers including rubbers and plastics. Exemplary food grade plastics and rubbers include, but are not limited to, santoprene, silicone, polyethylene terephthalate (PET or PETE), high-density polyethylene (HDPE), polyvinyl chloride (V or PVC), low-density polyethylene (LDPE), polypropylene (PP), polystyrene (PS), biologically derived plastics, or combinations thereof. The flexible polymer material used ideally has a Shore hardness value low enough to allow flexing of the horizontal and vertical scrapers 280, 284 while in use. Exemplary Shore values for the flexible overmolds 216, 274 include 10A to 80A, and more particularly, 25A to 40A. The polymers used may or may not include biphenol A.

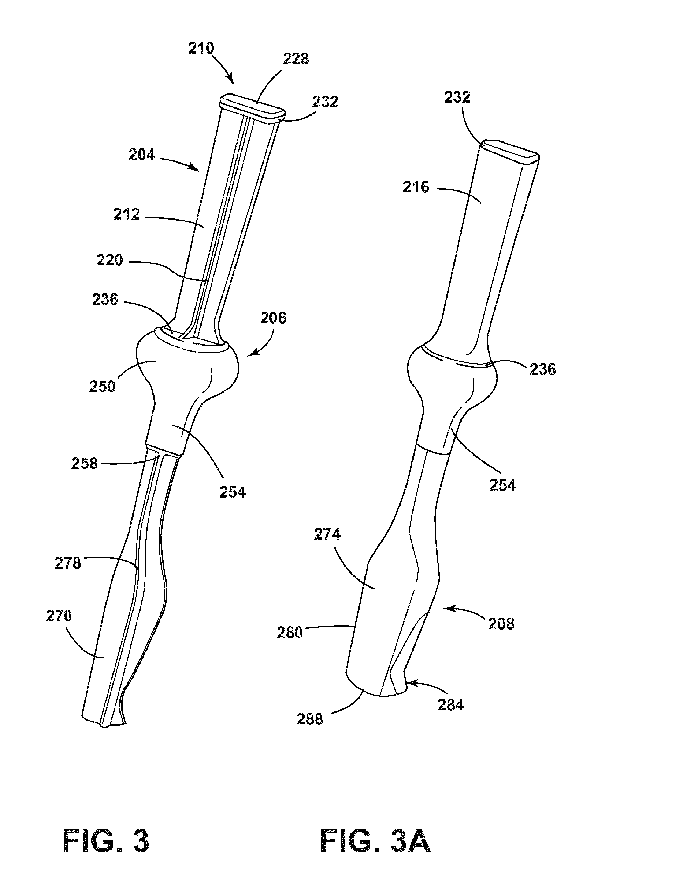

Referring now to FIGS. 3 and 3A, the blender scraper 200 may be manufactured in a dual shot gas assisted injection molding system. According to one embodiment, the injection molding system can inject a rigid polymer to integrally form the handle core 212, bulge 206, and scraper core 270. After an appropriate cooling time, a second shot of the injection molding process occurs. During the second shot, a flexible polymer is injected and channeled over the handle core 212 and the scraper core 270. As the flexible polymer is cooled, the handle and scraper overmolds 216, 274 are formed. It is contemplated that the overmolds 216, 274 may be of a different flexible polymer or that the overmolds 216, 274 may be formed during different shots within the same injection process.

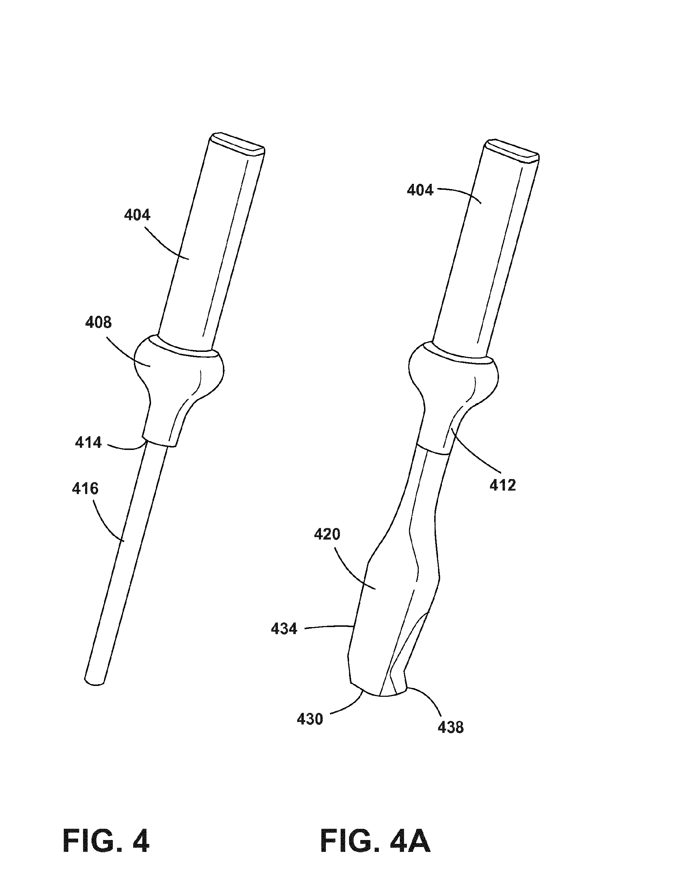

With reference to FIGS. 4 and 4A, yet another embodiment of a blender scraper 400 is depicted. The blender scraper 400 may have a handle 404 that is blow molded rather than injection molded. The handle 404 may include a handle overmold 216 in a manner similar to previous embodiments. The blow molded handle 404 may be hollow and integrally connects with a bulge 408, similar to that of the previous embodiments. The bulge 408 tapers to a cylinder 412 from which a hollow blow molded stem 416 extends. Blow molding is advantageous in that it may provide hollow parts which weigh less and are less costly than injection molded or over molded parts. At an interface, between the cylinder 412 and the stem 416, is a lip 414. A scraper overmold 420, separately injection molded, is placed over the stem 416, secured against the lip 414, and bonded in place. In another embodiment, the overmold 420 may be formed in a dual shot injection mold. The scraper overmold 420 includes a contoured blunt end 430, a vertical scraper 434, and a horizontal scraper 438, similar to previous embodiments. In the depicted embodiment, the vertical scraper 434 is positioned on an opposite side of the scraper overmold 420 than the horizontal scraper 438 in order to maximize the ability of each scraper 434, 438 to manipulate blended material.

## Claims

1. A blending appliance comprising:
a blender jar (74) defining a receptacle portion (90), an open end (82), and a closed end (98);
a blender lid (86) configured to mate with the open end (82) of the bender jar (74), wherein the lid (86) defines an aperture (102);
a blender (70) having an upper housing (110) defining a cavity (126) configured to accept a funnel (130), wherein the blender(86) is configured to accept the blender jar (74) such that the funnel (130) and the lid aperture (102) are aligned; and
a scraping utensil (10, 200, 400) having a scraper portion (46, 208, 420) and a bulge (30, 206 , 408) wherein the bulge (30, 206 , 408) is configured to pivotally engage the funnel (130) such that the scraper portion (46, 208, 420) may be adjusted within the receptacle portion (90).

2. The blending appliance of claim 1, wherein the scraping utensil (10, 200, 400) defines a vertical scraper (50, 280, 434) and a horizontal scraper (54, 284, 438).

3. The blending appliance of claims 1 or 2, wherein the scraping utensil (10, 200, 400) further defines a blunt tip (58, 288, 430), the blunt tip (58, 288, 430) being contoured to be closely received by the closed end (98) of the blender jar (74).

4. The blending appliance of claims 1, 2, or 3, wherein the scraper portion (10, 200, 400) is a flexible overmold and comprises at least one of santoprene, silicone, polyethylene terephthalate, high-density polyethylene, polyvinyl chloride, low-density polyethylene, polypropylene, polystyrene, and biologically derived plastics.

5. The blending appliance of claims 1-4, wherein the bulge (30, 206, 408) is semi-spherical in shape.

6. The blending appliance of claims 1-5, wherein the blender jar (74) further comprises a blade assembly (94) positioned at the closed end (98).

7. The blending appliance of claims 6, wherein the bulge (30, 206 , 408) of the scraping utensil (10, 200, 400) is configured to abut the funnel (130) thereby limiting penetration of the scraping utensil (10, 200, 400) into the blender jar (74).

8. The blending appliance of claims 1-7, wherein the scraping utensil (10, 200, 400) has a handle (20, 204, 404), and further wherein the handle (20, 204, 404) protrudes from the upper housing (110) when the bulge (30, 206, 408) is pivotally engaged with the funnel (130).

9. A blender scraper comprising:
a handle (404);
an intermediate bulge (408) integrally coupled with the handle (404) and having a smooth exterior surface (160);
a stem ((416) operably coupled with the bulge (30, 206 , 408); and
a flexible overmold (420) configured to be positioned over the stem (416), the overmold (420) defining a vertical scraper(434), a blunt tip (430), and a horizontal scraper (438).

10. The blender scraper of claim 9, wherein the flexible overmold (420) comprises at least one of santoprene, silicone, polyethylene terephthalate, high-density polyethylene, polyvinyl chloride, low-density polyethylene, polypropylene, polystyrene, and biologically derived plastics.

11. The blender scraper of claims 9 or 10, wherein a lip (414) is defined by an interface between the bulge (408) and the stem (416), further wherein the flexible overmold (420) is in abutting contact with the lip (414).

12. The blender scraper of claims 9, 10 or 11, wherein the blunt tip (430) is contoured to be closely received by a closed end (98) of a blenderjar (74).

13. The blender scraper of claims 9-12, wherein the vertical scraper (434) and the horizontal scraper (438) are disposed on opposites sides of the overmold (420).

14. The blender scraper of claims 9-13, wherein the bulge (30, 206, 408) has a diameter greater than the overmold (420) and the handle (404).

15. The blender scraper of claims 9-14, wherein the handle and the stem (416) are defined on opposite sides of the bulge (30, 206, 408).
